Europäisches Patentamt

European Patent Office

Office européen des brevets

(19)

(11) Publication number : **0 469 850 A2**

# (12) EUROPEAN PATENT APPLICATION

(21) Application number : **91306963.9**

(22) Date of filing : **30.07.91**

(51) Int. Cl.⁵ : **G06F 9/44**

(30) Priority : **30.07.90 US 560645**

(43) Date of publication of application :
**05.02.92 Bulletin 92/06**

(84) Designated Contracting States :
**DE GB**

(71) Applicant : **Epard, Marc A.**
**3104 W. 38th**
**Lawrence, Kansas 660247 (US)**
Applicant : **Denneller, Charles Ross**
**919 Alma Drive**
**Lawrence, Kansas 66047 (US)**

(72) Inventor : **Epard, Marc A.**
**3104 W. 38th**
**Lawrence, Kansas 660247 (US)**
Inventor : **Denneller, Charles Ross**
**919 Alma Drive**
**Lawrence, Kansas 66047 (US)**

(74) Representative : **Colgan, Stephen James et al**
**CARPMAELS & RANSFORD 43 Bloomsbury**
**Square**
**London WC1A 2RA (GB)**

(54) **Method and apparatus for pre-recording, editing and playing back presentations on a computer system.**

(57)    A system for pre-recording, editing, and playing back a presentation on computer systems creates "tapes" of screen session files, marks and edits them, records and synchronizes sound on them, annotates them with buttons or other overlay graphics, presents them interactively through pointing and clicking, and plays them back through various modes. No special animation or scripting skills are required.

EP 0 469 850 A2

FIG. 2

## BACKGROUND OF THE INVENTION

The present invention relates to pre-recording, editing and playing back presentations on a computer system. More particularly, this invention relates to editing screen session files, adding sound to and annotating such files, and playing back such files in a variety of ways. For purposes of describing the present invention, screen session files, recorded on disc storage devices in a personal computer system, may be metaphorically called a "tape" or "tapes". Similarly, as an extension of the metaphor, any part of such tapes may be referred to as a "clip" or "clips".

In the past, training or other information has been provided typically by in-person presentations or pre-recorded film or video tape. If provided by a live presenter, the audience loses potential advantages of "instant replay" and must attend the presentation at the convenience of the presenter or other members of the audience. If provided by film or video tape, the time and expense to produce high-quality film or tape presentations must be considered and budgeted, and special, often expensive presentation equipment - namely, film projector and screen or video tape player and television monitor - are required.

With the growing, wide-spread use of personal computer systems (hereafter also microcomputers or microcomputer systems) in industry, government, educational institutions and private homes, presentation of training or other information on such microcomputers is highly desireable. Often, such microcomputers are interconnected by a local area network (LAN) or wide area network (WAN), making the desirability of microcomputer-based, pre-recorded presentations even greater.

In conventional video, animation is achieved by displaying a sequence of changing pictures or frames several times a second. This creates the illusion of motion. In some systems for storing video data for use in computer systems, instead of storing entire frames, data representing changes from the previous frame are recorded. Thus, only the data required to change the previous frame into the next frame is saved. Much of the information that would remain the same between the frames is not stored which results in data compression. Here then, compression is simply removal of redundant information.

To edit conventional video sequences of frames are moved, added and/or deleted to produce an edited tape. With compressed video data, however, there are no frames but only data representing changes between frames, and editing cannot be done by merely rearranging the changes from frame-to-frame, since they are dependant on the previous image. Thus, the changes between frame, i.e. drawing commands, must be context sensitive, since the same command in a different context may not have the same result.

The most basic form of human communication is verbal. Therefore, sound is at least as important as text and graphics in a training tape. Sound not only conveys meaning, but also communicates compelling emotional content that might otherwise be absent. Since sound is not typically associated with computer presentations, addition of sound to such presentations is desireable for a totally effective presentation.

## SUMMARY OF THE INVENTION

A system for pre-recording, editing, and playing back a presentation on a microcomputer constructed according to the present invention provides everything a user needs to create tapes, mark and edit them, record and synchronize sound on them, annotate them with buttons or other overlay graphics, present them interactively through pointing and clicking, and play them back through various modes. No special animation or scripting skills are required.

The types of presentations which may be prepared by using the present invention may be as widely varied as experienced users of microcomputers can make them. The most common types of training requirements are those where novices ask expert users questions such as "how to; '"what is;'and "show me". Using the present invention, experts may answer those questions with fully-produced tapes which can be viewed by any number of novice users, each at their own convenience. The present invention eliminates the need for expert users to repeat themselves over and over again. Of course, the tapes prepared or being prepared for individual use also can be presented on large screen computer monitors to groups or for management preview or final editing before release.

A presentation system for pre-recording, editing and play back of presentations on a computer system constructed according to the principles of the present invention comprises a recording component, a play back component and an editing component. The recording component records the desk top motions of the screen session of virtually any application program in real-time onto a tape stored in disc memory, and is available at any time as a desk accessory. The play back component provides several ways to play back tapes created in accordance with the present invention: 1) from within the editing component through the recording component; 2) from Hypercard using a special playback command; 3) via a special application designed for playing back tapes created using the present invention; or 4) by using the editing component to create tapes that become stand alone applications. Thus, any application software that can launch another application, such as MacroMind Director®, will be able to play back tapes created in accordance with the present invention.

With the editing component, the user can mark points on the tape, cut and paste clips, and add sound through a sound digitizer. The tapes can then be annotated with buttons, arrows, explanatory text and other graphic overlays, none of which require special scripting ability.

To edit the compressed video data stored for use in the system of the present invention, the proper context for each drawing command must be maintained. Proper context is maintained by a clip or clips. A clip contains a starting context and the sequence of drawing commands or changes to that context from previous clips. Initially, the tape can be thought of as a single clip. This clip can then be divided into two clips and the resulting clips can be further subdivided in the same way indefinitely, as desired.

Clips are independent units that contain all the context needed to produce a segment of video. As a result, clips may be added, deleted, or moved to other parts of the video information and still retain the proper image. Therefore, instead of rearranging frames as in conventional video, clips are rearranged to edit compressed video. Thus, the editing component of the present invention divides a tape into clips to edit compressed video data with more ease than editing film or video tape.

The presentation system of the present invention also includes a component for adding narrations or sound effects to tapes of video information. The audio data added to such tapes also may be edited in the same way as video data.

The choice of video and sound compression algorithms in the present invention allows the user to conserve RAM and disc space. Screen images are many times more compressed than the bimaps, and sounds can be compressed at four standard sampling and four compression rates.

## DESCRIPTION OF THE DRAWINGS

For fuller understanding of the present invention, reference is made to the accompanying drawing in the following detailed Description of the Preferred Embodiment of the invention. In the drawing:

Figure 1 is a block diagram of a system for pre-recording, editing and playing back of presentations on a microcomputer system in accordance with the principles of the present invention.

Figure 2 is a diagram of the data structure employed in the editing component of the system of Figure 1.

Figure 3 is a flow diagram of the algorithm for splitting a clip by the editing component of the system of Figure 1.

Figure 4 is a flow diagram of the algorithm for playing back a tape produced by the system of Figure 1.

Figure 5 is a flow diagram of the algorithm of playing back a clip produced by the system of Figure 1.

Reference numbers refer to the same or equivalent parts of the present invention throughout the several figures of the drawing.

## DESCRIPTION OF THE PREFERRED EMBODIMENT

A system for pre-recording, editing and playing back presentations on a computer system is decribed whit reference to Annex A. While the preferred embodiment of the present invention is intended for use on a Macintosh personal computer, manufactured and marketed by Apple Computer, Inc., the present invention may also be used on many computer or microcomputer system. The owners's guide which accompanies Macintosh computers is also incorporated by reference as if fully set forth herein.

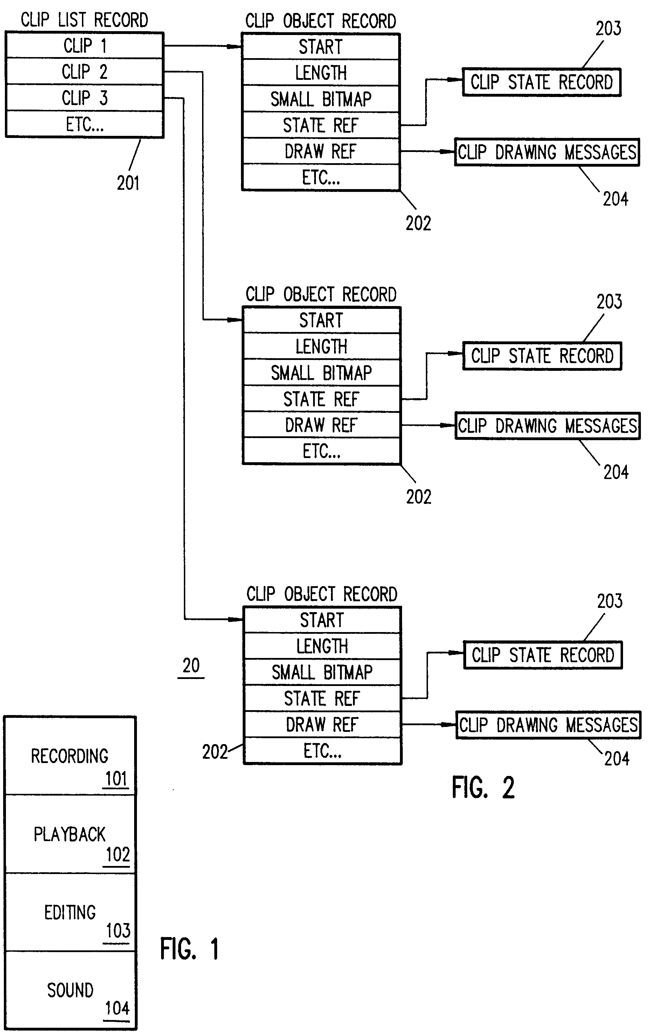

Referring now to Figure 1, system 10 for pre-recording, editing and playing back presentations in accordance with the present invention comprises recording component 101, playback engine 102 and editing component 103.

Recording component 101 comprises ScreenRecorder which records Macintosh screen animation to a file on a disc memory device in the microcomputer system. The technique for capturing and storing screen animation is similar to that described in the Farallon Timbuktu User's Guide and the Farallon Timbuktu Remote User's Guide (both available before the date of this Application ) and incorporated by reference as if fully set forth herein. Even though recording component 101 records images in black and white, annotations and pictures overlays may be in color.

For the present invention, ScreenRecorder utilizes Quick Draw® routine built into every Macintosh. In the system described in the Timbuktu User's and Remote User's Guide these commands are intercepted and sent over a network and then displayed on another machine. Instead of sending the command over the network as described, ScreenRecorder saves these drawing commands to atape (i.e. disc file)for later use in editing the video data according to the present invention. Since the tape is a sequence of drawing commands, and drawing commands are changes to the previous screen's contents, a tape is inherently compressed video.

Playback engine 102 includes elements from recording component 101 and sound component 104 which of no part of the present invention.

Editing component 103 edits the video portion of each tape according to the present invention by organizing video data into four parts as shown in Figure 2 and Tables I - V. The first part is clip list 201 which contains the numbered sequence of clips in the tape. Clip object 202 record contains information about an individual clip, such as its starting time and duration. Clip state record 203 which contains the drawing context at the start of a clip. Finally, clip drawing messages 204 include commands which are described in the Timbuktu Guides mentioned above together with additional ScreenRecorder specific messages that contain timing information and user events.

## TABLE I

### Clip List Record - List of clips in the tape.

| | |
|---|---|
| Clip ID | First clip in tape |
| Clip ID | Second clip in tape |
| Clip ID | Third clip in tape |
| etc... | for each clip in tape |

## TABLE II

### Clip Object Record - Information about an individual clip.

| | |
|---|---|
| ID | the identifier to reference this clip |
| Length | Duration of clip in 60ths of a second |
| Starting Time | Relative starting time of clip in tape |
| Hard | True if clip has been moved from original location |
| Title | Name of clip enter by user |
| Small Picture | A small bit map of the Clip State bit map |
| State | Reference to Clip State |
| Data | Reference to Clip Data |

## TABLE III

### Clip State Record - Context for the drawing commands.

| | |
|---|---|
| BitMap | Initial Bit Map at the start of this clip |
| Width | Recorded screen width |
| Height | Recorded screen height |
| Graphports | Steven Graphports caches to save QDP Graphports |

| | |
|---|---|
| | context |
| Bit Map stashes | Bit Map stashes for area under each pulldown menu |
| Time base | Current timing base |
| Cursor | Current cursor |
| Cursor Location | Point where cursor is located |

## TABLE IV

Graphport Record - QuickDraw Graphport context.

| | |
|---|---|
| Clipping Region | Region |
| Visible Region | Region |
| Origin | Point |
| portRect | Rect |
| patAlign | Point |
| fill Pattern | Pattern |
| pen Pattern | Pattern |
| background Pattern | Pattern |
| pen Mode | Integer |
| pen Size | Point |
| pen Location | Integer |
| text Font | Integer |
| text Face | Integer |
| text Mode | Integer |
| text Size | Integer |
| spExtra | Integer |

TABLE V

Clip Drawing Messages

Each clip drawing message comprises a stream of messages such as described in the Timbuktu Guides mentioned above and include messages specific to tapes of the present invention.

| Message | Type | Data |
|---|---|---|
| Mouse Location | -1 | Point |
| Timing Message | -4 | Long Integer in ticks |
| Timing Base | -5 | Long Integer in ticks |
| Mouse Down | -6 | Point |
| Mouse Up | -7 | Point |
| Key | -8 | Char |
| Keyboard Modifiers | -9 | Integer |

Editing a tape

When a tape is first created it contains only one clip. In order to edit the tape, the tape must be divided into multiple clips. This is done by a process called marking. The user plays the tape starting from a clip, whenever the user comes to a point of interest, they issue a mark command that will divide the clip into two.

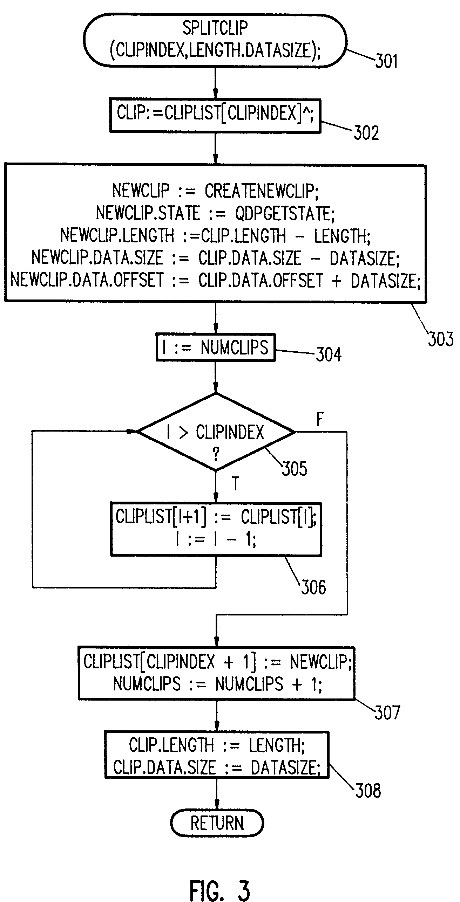

To divide a clip, it is necessary to create a new clip that contains the remainder of the drawing commands that have not played for the clip we are dividing. In order for the drawing commands to remain in the same context, it is necessary to get the current context from playback engine 102. The routine QDPGetState extracts the state information from the playback engine and places is in clip state record 203. Clip object record 202 being divided is then modified to reflect its shortened duration. Thus, two clips have been created which, when played back in sequence, will be visually the same as playing the original clip but they can now be moved around independent of each other. Clip dividing process 30 is desribed elsewhere in this specification in more detail with reference to Figure 3.

The clips can now be added, delete, or rearranged to edit the video tare. Clips reference in clip list record 201 can be rearranged or deleted using standard list manipulation methods. Clips may also be copied to other tapes by copying clip object records 202 and clip state records 203 and then their respective references added to clip list record 201.

Playing A tape

The present invention plays a tape one clip at a time in the sequence defined in clip list record 201. For each clip in the record, the proper graphic context is maintained and the appropriate drawing commands issued while regulating the playback speed with timing messages. This is done by first getting clip state record 201 and applying it to playback engine 102. This sets up the proper context for the drawing commands of this clip. The drawing commands are then returned to playback engine 102 at approximately the same rate as they where recorded. The timing information that was recorded along with clip drawing messages 204 regulates the playback speed. A time-base message, that provides the reference base for the other timing messages, is part of clip drawing messages 204. Timing messages are relative to this time base message.

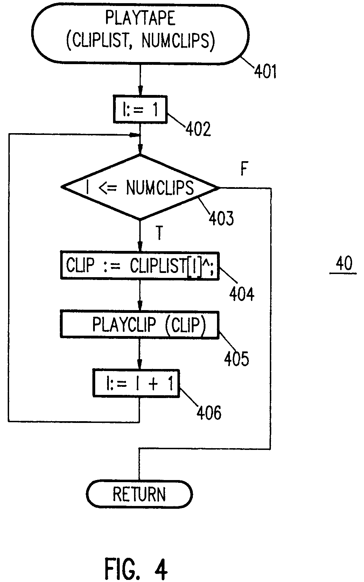

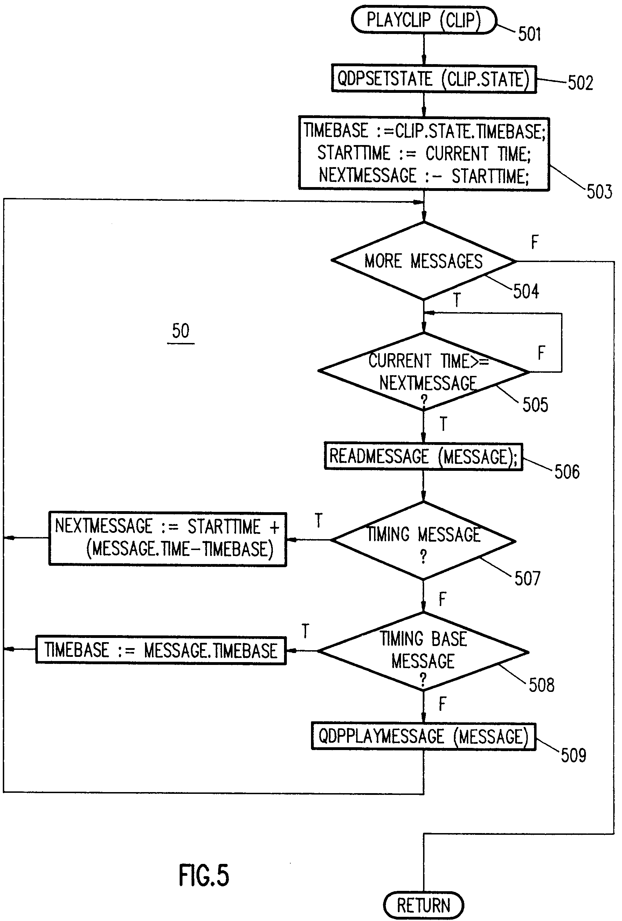

Clip drawing messages 204 are played until the clip reaches the playback time in the message and then delayed until it is time to continue with more drawing commands. This is done until there are no more messages in the clip data stream. This process is described elsewhere in this specification in more detail with reference to Figures 4 and 5.

Maintaining Context

As mentioned elsewhere in this specification, clips may be played sequentially. In addition, any of the clips in the tape can be branched, since each clip has the entire drawing context to integrate into sequence of clips. Branching of clips allows for interactive presentations. Instead of playing a linear sequence through the tape, multiple paths through a tape may be controlled by the user.

All raster imaging systems have a state or context associated with them. At the least they have the bit-map for the image currently being displayed. In addition to the bit-map, most drawing packages have additional context associated with the drawing environment. In the case of QuickDraw, there are graph ports which provide such information as the current pen size and pattern.

Most commands in a drawing environment will have different results if they are issued with the drawing environment in a different state, since those commands either 1) do not effect the entire bit-map, or 2) the environment relies on other variables. Thus, drawing commands are dependant on the environment.

Recording component 101 creates the first clip in a tape by copying the current screen bit-map into a state bit-map for the clip. The attributes of all graph ports are set to a well-known state. The initial state bit-map sets up the context for the first command to be the captured into the tape. When the tape is being edited, the drawing state is maintained by getting the drawing state from playback engine 102 when the clip is split. The retrieved state is stored in the newly created clip to maintain the entire context and ensure that the first drawing command for this clip will produce the same results when played back. Subsequent drawing commands in the clip are maintained in the same order - hence, context - as when they were recorded. Referring now to Figure 3, dividing process 30 splits clips in accordance with the operations given below.

In operation 301, the clip specified by (clipIndex) is divided at the time (length) and data stream position (dataSize).

In operation 302, retrieve clip being divided.

In operation 303, create a new clip; retrieve state from the QuickDraw Playback (QDP) engine to maintain the context for drawing commands. Set length and drawing data size to the last part of the clip being splitting.

In operation 304, previous clips are moved up in the list to make room for the new clip starting at the last clip in clip list 201.

In operation 305, determine whether the new clip should be inserted.

In operation 306, move clip record up one item in the list and move down one item.

In operation 307, inset the new clip directly after the clip being divided and increase the number of clips in the tape.

In operation 308, modify the clip being divided to reflect shortened length.

Referring now to Figure 4, tape play back control process 40 plays tapes back in accordance with the operations given below.

In operation 401, the tape is played in the sequential order as specified by the (clipList) and (numClips).

In operation 402, start with the first clip in the tape.

In operation 403, determine whether there more clips left to be played.

In operation 404, retrieve the clip to be played.

In operation 405, play this clip.

In operation 406, advance to the next clip in the tape.

With reference to Figure 5, clip play back control process 50 plays clips back in accordance with the operations given below.

In operation 502, the state (or context) of the clip is applied to the QDP playback engine to maintain the proper context for the clip's drawing commands.

In operation 503, the time base for this clip in set and the time when this clip started playing is stored. The next time a drawing message needs to be processed is now.

In operation 504, determine whether more messages in the drawing messages stream need to be processed.

In operation 505, determine whether it is time to proceed with the next message.

In operation 506, read one message from the draw message stream.

In operation 507, if a timing message, then compute the next time a message needs to be processed.

In operation 508, if a time base message, then reset the current time base.

In operation 509, if a drawing message, let the QDP playback engine handle it. The first drawing command in the clip will be in the proper context, since the entire drawing context for this command is saved at the start of the clip and the remaining commands in the clip are issued in the originally recorded order.

Referring again to Figures 3 and 5, it should be noted that QDPSetState initialized the state of play back engine 102 to clip state record 203 (see Table III). Conversely, QDPGetState returns the state of play back engine 102 to a clip state record.

## Sound

Presentation system 10 of the present invention also includes sound component 104 which records, edits and plays back sound synchronized with screen session video data. The system provides four sampling rates and four compression ratios which allows the user to control sound quality and memory usage. The user is also alerted to the amount of recording time available.

Sound data is sampled and compressed in both monaural and stereophonic modes, and may include special sound effects, mixed sound tracks and maybe stored separately for other uses. Sound component 104 includes MacRecorder, a hand-held sound input device, and SoundEdit, a program for recording and editing sampled and compressed sound data.

MacRecorder is more fully described in co-pending application for U.S. patent serial no. 07/291,808, entitled "SELF-POWERED DIGITAL TO ANALOG CONVERTER," filed December 29, 1988 which is assigned to the assignee of the present invention and incorporated by reference as if fully set forth herein. SoundEdit is more fully described in co-pending application for U.S. patent serial no. 07/302,510, entitled "COMPUTER SOUND EDITING DISPLAY SYSTEM", filed January 26, 1989 which is assigned to the assignee of the present invention and incorporated by reference as if fully set forth herein.

Reference is also made to the above mentioned Farallon Timbuktu User's Guide and the Farallon Timbuktu Remote User's Guide in the context of sound component 104.

## Claims

1. In a system for pre-recording and playing back presentations on a computer system, apparatus for editing screen session data comprising:

storage means for storing user instructions and said screen session data, said screen session data comprising a plurality of frames of video bit-map data and related associated context commands, said video bit-map data representing at least one frame of screen session data and data representing successive changes from previous frames of said video bit-map data;

processing means, coupled to said storage means for processing said screen session data in response to said user instructions;

playback means, coupled to said storage means and said processing means for producing presentations in response to said user instructions, said presentations comprising successive frames of screen session data in response to said associated context commands; and

clip means, coupled to said storage means, processing means, and playback means, for successively dividing said frames of screen session data into clips comprising video bit-map data and associated context commands, and for editing said bit-map data and associated context commands in response to said user instructions.

CLIP LIST RECORD

| CLIP 1 |
| CLIP 2 |
| CLIP 3 |
| ETC... |

201

CLIP OBJECT RECORD

| START |
| LENGTH |
| SMALL BITMAP |
| STATE REF |
| DRAW REF |
| ETC... |

202

203

| CLIP STATE RECORD |

| CLIP DRAWING MESSAGES |

204

CLIP OBJECT RECORD

| START |
| LENGTH |
| SMALL BITMAP |
| STATE REF |
| DRAW REF |
| ETC... |

202

203

| CLIP STATE RECORD |

| CLIP DRAWING MESSAGES |

204

<u>20</u>

CLIP OBJECT RECORD

| START |
| LENGTH |
| SMALL BITMAP |
| STATE REF |
| DRAW REF |
| ETC... |

202

203

| CLIP STATE RECORD |

| CLIP DRAWING MESSAGES |

204

**FIG. 2**

| RECORDING |
| <u>101</u> |
| PLAYBACK |
| <u>102</u> |
| EDITING |
| <u>103</u> |
| SOUND |
| <u>104</u> |

**FIG. 1**

10

```
        ┌──────────────────────────────┐
        │          SPLITCLIP           │
        │  (CLIPINDEX,LENGTH.DATASIZE); │──── 301
        └──────────────────────────────┘
                      │
                      ▼
        ┌──────────────────────────────┐
        │   CLIP:=CLIPLIST[CLIPINDEX]^; │──── 302
        └──────────────────────────────┘
                      │
                      ▼
  ┌──────────────────────────────────────────────────────┐
  │        NEWCLIP := CREATENEWCLIP;                       │
  │        NEWCLIP.STATE := QDPGETSTATE;                   │
  │        NEWCLIP.LENGTH :=CLIP.LENGTH − LENGTH;          │
  │        NEWCLIP.DATA.SIZE := CLIP.DATA.SIZE − DATASIZE; │
  │   NEWCLIP.DATA.OFFSET := CLIP.DATA.OFFSET + DATASIZE;  │
  └──────────────────────────────────────────────────────┘──── 303
                      │
                      ▼
              ┌──────────────────┐
              │  I := NUMCLIPS   │──── 304
              └──────────────────┘
                      │
                      ▼
                 ╱─────────╲                F
       ┌────────▶  I > CLIPINDEX ──────────────┐
       │         ╲    ?    ╱  ──── 305         │
       │          ╲───────╱                    │
       │              │ T                       │
       │              ▼                         │
       │   ┌──────────────────────────┐         │
       │   │ CLIPLIST[I+1] := CLIPLIST[I]; │      │
       │   │       I := I − 1;          │         │
       │   └──────────────────────────┘──── 306  │
       └──────────────┘                          │
                                                 │
                      ┌──────────────────────────┘
                      ▼
  ┌──────────────────────────────────────────────┐
  │  CLIPLIST[CLIPINDEX + 1] := NEWCLIP;          │
  │        NUMCLIPS := NUMCLIPS + 1;              │
  └──────────────────────────────────────────────┘──── 307
                      │
                      ▼
  ┌──────────────────────────────────────────────┐
  │        CLIP.LENGTH := LENGTH;                 │
  │        CLIP.DATA.SIZE := DATASIZE;            │
  └──────────────────────────────────────────────┘──── 308
                      │
                      ▼
              ┌──────────────┐
              │    RETURN     │
              └──────────────┘
```

FIG. 3

11

FIG. 4

```
                              PLAYCLIP (CLIP)          501

                              QDPSETSTATE (CLIP.STATE)    502

                         TIMEBASE :=CLIP.STATE.TIMEBASE;
                          STARTTIME := CURRENT TIME;
                          NEXTMESSAGE :- STARTTIME;          503

                                                    F
                              MORE MESSAGES
                                              504
                                      T

                50
                              CURRENT TIME>=            F
                              NEXTMESSAGE
                                  ?              505
                                      T

                              READMESSAGE (MESSAGE);      506

      NEXTMESSAGE := STARTTIME +    T
      (MESSAGE.TIME-TIMEBASE)          TIMING MESSAGE
                                           ?            507
                                      F

      TIMEBASE := MESSAGE.TIMEBASE    T   TIMING BASE
                                          MESSAGE
                                           ?            508
                                      F

                              QDPPLAYMESSAGE (MESSAGE)     509


                FIG.5

                              RETURN
```